(19) Europäisches Patentamt / European Patent Office / Office européen des brevets

(11) **EP 0 801 480 B1**

(12) **FASCICULE DE BREVET EUROPEEN**

(45) Date de publication et mention
de la délivrance du brevet:
**14.05.2008   Bulletin 2008/20**

(51) Int Cl.:
*H04L 9/32* (2006.01)

(21) Numéro de dépôt: **97400792.4**

(22) Date de dépôt: **07.04.1997**

(54) **Procédé d'identification et/ou de signature**

Verfahren zur Identifikation und/oder zur Unterschrift

Identification and/or signature method

(84) Etats contractants désignés:
**DE FR GB IT**

(30) Priorité:   **09.04.1996   FR 9604406**

(43) Date de publication de la demande:
**15.10.1997   Bulletin 1997/42**

(73) Titulaire: **FRANCE TELECOM**
**75015 Paris (FR)**

(72) Inventeurs:
 • **Gilbert, Henri**
   **91440 Bures Sur Yvette (FR)**
 • **Cherbonnier, Frédéric**
   **75005 Paris (FR)**

(56) Documents cités:
   **EP-A- 0 311 470**          **EP-A- 0 325 238**

**Description**

**Domaine technique**

La présente invention a pour objet un procédé d'identification et/ou de signature.

L'invention relève de la cryptographie à clé publique. Dans ce domaine, l'identification est un processus permettant à une entité réceptrice de s'assurer de l'authenticité de l'identité d'une entité émettrice. La signature est un processus permettant d'assurer l'authenticité d'un message adressé par une entité émettrice à une entité réceptrice.

L'invention trouve de nombreuses applications dans la santé, les transports, les télécommunications, la banque. De manière générale, l'invention utilise des schémas de signature et d'identification fondés sur la difficulté de factoriser un grand nombre, schémas qui nécessitent de réaliser des opérations se ramenant essentiellement à des multiplications modulo de grands nombres.

Pour un schéma donné, le nombre de multiplications modulaires à effectuer par celui qui doit signer le message et prouver son identité est un paramètre crucial, en particulier dans le cas où le module de sécurité dans lequel sont effectués les calculs cryptographiques est une carte à mémoire. Pour la plupart des schémas connus, le nombre de multiplications nécessaires conduit, dans le cas d'une implantation sur une carte à mémoire utilisant un microprocesseur standard, à un temps de calcul peu réaliste pour ce qui concerne la signature, et pénalisant pour l'identification. On peut arriver à des temps de signature et d'identification beaucoup plus acceptables en dotant la carte d'un coprocesseur cryptographique, mais ce choix entraîne un doublement du prix de la carte.

L'un des buts de la présente invention est de réduire suffisamment le nombre de multiplications modulaires nécessaires a une identification et/ou à une signature, pour parvenir à des schémas pouvant être implantés dans une carte à mémoire non dotée d'un coprocesseur arithmétique.

La présente invention a pour objet un procédé d'identification et/ou de signature qui s'apparente à la fois au schéma d'identification et de signature de FIAT et SHAMIR et au schéma d'identification et de signature de QUILLOU et QUISQUATER. Le procédé de l'invention vise un compromis intéressant entre le nombre de multiplications à effectuer par celui qui veut prouver son identité et celui qui la vérifie et le nombre de secrets que le premier doit détenir.

**Etat de la technique antérieure**

Pour simplifier la terminologie, on appellera l'entité dont on vérifie l'authenticité "le vérifié" et celui qui vérifie cette authenticité "le vérificateur" (la terminologie anglaise correspondante est "the claimant" ou "the prover" et "the verifier").

Plusieurs schémas d'identification et de signature sont connus. Ils se classent schématiquement en trois familles :

**A - Schémas fondés sur la difficulté de factorisation d'un grand nombre**

Les schémas de cette famille peuvent être utilisés aussi bien pour l'identification que pour la signature. Ainsi, l'algorithme de chiffrement à clé publique dit RSA ("RIVEST-SHAMIR-ADLEMAN"), décrit dans le brevet US-A-4,405,829, qui est actuellement l'algorithme à clé publique le plus utilisé, fournit des schémas de signature (comme par exemple la méthode de signature décrite dans la norme ISO 9796) utilisables également à des fins d'identification.

D'autres schémas sont apparus par la suite comme le schéma d'identification de FIAT et SHAMIR, décrit dans le brevet US-A- 4,748,668 et le schéma d'identification de GUILLOU et QUISQUATER décrit dans le document FR-A-2 620 248 (ou son correspondant européen EP-A-0 311 470 ou son correspondant américain US-A-5,218,637). Ils figurent parmi les autres solutions les plus utilisées car ils possèdent de nombreux avantages :

- ils fournissent un schéma de signature réaliste,
- ils nécessitent moins de calculs que le schéma RSA pour le vérifié,
- ils mettent en oeuvre une procédure dite de preuve par apport nul de connaissance (en anglais "zero knowledge proof"), c'est-à-dire que le vérifié ne révèle pas son secret ; l'utilisation du secret du vérifié dans les échanges d'identification n'affaiblit donc pas ce secret,
- la gestion des clés publiques peut, en option, être fondée sur l'identité, c'est-à-dire qu'on peut prendre pour clé publique d'identification

ou de signature d'un utilisateur des paramètres que chacun est à même de déduire de l'identité de cet utilisateur ; cette méthode simplifie la gestion des clés publiques : elle dispense le vérifié d'avoir à délivrer sa clé publique et la signature, par une autorité, de la correspondance entre cette clé publique et son identité (méthode de certification X509, du nom de la recommandation de l'UIT où elle est décrite).

**B - Schémas fondés sur la difficulté du problème du logarithme discret dans un groupe fini de grande taille**

Parmi les schémas de cette famille utilisables à la fois en identification et en signature, on peut citer :

- le schéma de T. EL GAMAL, décrit dans l'article "A public key cryptosystem and a signature scheme based on discrete logarithms", publié dans la revue IEEE Transaction on Information Theory, vol. IT-31, pp. 469-472, 1985 ;
- le schéma de SCHNORR, décrit dans les documents EP-A-0 384 475 et US-A-4,995,082, qui est un schéma d'identification à apport nul de connaissance dont on peut tirer un schéma de signature réaliste ;
- le schéma DSS ("Digital Signature Standard"), inspiré des deux précédents, décrit dans le document US-A-5,231,668.

Aucun de ces schémas ne se prête à une gestion des clés fondée sur l'identité.

**C - Schémas fondés sur la difficulté de problèmes non issus de la théorie algébrique des nombres (problèmes purement combinatoires, etc...)**

Des schémas d'identification à apport nul de connaissance relativement efficaces, non fondés sur la factorisation ou le logarithme discret, ont été proposés récemment. Il s'agit en particulier du schéma dit "PKP" dû à A. SHAMIR et publié dans l'article intitulé "An Efficient Identification Scheme Based on Permuted Kernels" dans les Comptes-Rendus de la conférence CRYPTO'89, LNCS 435, pp. 235-251, Springer Verlag, 1989 et du schéma dit "SD" dû à J. STERN et décrit dans l'article intitulé "A New Identification Scheme Based On Syndrome Decoding", publié dans les Comptes-Rendus de CRYPTO'93, LNCS 773, pp. 13-21, Springer Verlag, 1994.

Cependant, aucun des schémas d'identification de cette famille proposés à ce jour ne fournit une méthode de signature efficace.

Pour en revenir aux schémas de FIAT et SHAMIR et de GUILLOU et QUISQUATER, il s'agit, dans les versions de base, de schémas d'identification à trois passes ou phases entre un vérifié et un vérificateur : envoi par le vérifié d'un nombre appelé témoin, envoi par le vérificateur d'une question, envoi par le vérifié d'une réponse. Ces deux schémas fournissent en même temps un schéma de signature non interactif (c'est-à-dire en une passe), par un procédé général consistant à remplacer la question par une fonction du témoin et du message à signer. Une description de ce procédé sera donnée plus loin.

Dans les schémas de signature considérés, et, en option, dans les schémas d'identification, on fait appel à une fonction à sens unique H (qui peut, en pratique, être calculée à l'aide d'une fonction de condensation comme MD5) de taille de sortie fixée, au moins égale à 64 bits. La fonction H doit être facile à calculer, mais, étant donné une entrée x, il doit être hors de portée d'un ordinateur de trouver une seconde entrée x' distincte de x telle que H(x')=H(x).

Pour un schéma d'identification, on appelle "niveau de sécurité" la probabilité maximale pour un tricheur (ne détenant pas le secret du vérifié) de répondre correctement à une question aléatoire du vérificateur. Pour les schémas considérés, on peut, sous certaines conditions sur les exposants publics utilisés, montrer que le niveau de sécurité est égal à l'inverse du nombre de questions possibles (supposées tirées selon la loi uniforme). Cette définition s'étend facilement au schéma de signature associé à un schéma d'identification. Il est généralement admis qu'un niveau de sécurité de l'ordre de $2^{-20}$ est souhaitable pour un schéma d'identification, et qu'un niveau de sécurité inférieur à $2^{-64}$ est souhaitable pour un schéma de signature.

En ce qui concerne plus particulièrement le schéma de FIAT et SHAMIR, on peut rappeler qu'il est fondé sur la difficulté de factoriser un nombre n qui est le produit de deux grands nombres premiers p et q. La clé secrète d'un vérifié P est constituée de k nombres $s_1$, $s_2$,..., $s_k$ inférieurs à n. La clé publique du vérifié est constituée du nombre n et des k nombres $v_1$, $v_2$, ..., $v_k$ obtenus à partir des $s_1$, $s_2$, ..., $s_k$ de la manière suivante :

$$v_1 = s_1^{-2} \bmod n \; ; \; ... \; ; \; v_k = s_k^{-2} \bmod n$$

Le protocole de base, en trois passes et quatre opérations, qui permet à un vérifié P de s'identifier auprès d'un vérificateur V est le suivant :

(1) P tire au sort un nombre r compris entre 0 et n-1, et transmet à V le nombre $x = r^2 \bmod n$, ou une fonction à sens unique de x, notée h=H(x) ; le nombre x (ou le nombre h) est appelé "témoin".

(2) V tire au sort k bits $a_1$ à $a_k$, et transmet à P la question formée par l'ensemble de ces bits $(a_1, ..., a_k)$.

(3) P calcule la réponse $y = r \prod_{i=1..k} s_i^{a_i}$ mod n et la transmet à V.

(4) V vérifie que $y^2 \cdot \prod_{i=1..k} v_i^{a_i}$ est égal au témoin x, ou encore que $H(y^2 \cdot \prod_{i=1..k} v_i^{a_i})$ est égal au témoin h.

Ce protocole peut être répété un nombre t de fois, soit séquentiellement (protocole à 3.t passes), soit en parallèle (protocole à 3 passes) : (1) envoi de t témoins $x_l$ à $x_t$ (ou $h_l$ à $h_t$), (2) envoi de t questions de k bits, (3) envoi de t réponses $y_l$ à $y_t$, (4) vérification des t équations correspondantes.

Ce protocole d'identification peut être transformé en un schéma de signature non interactif. On se contentera d'expliciter le cas du protocole de base : pour signer un message m, le vérifié P produit un témoin x correspondant à un nombre aléatoire r. Au moyen d'une fonction à sens unique et à partir du message m et du témoin x, il calcule aussi H(m,x). Puis P calcule la réponse y correspondant à la question $(a_1, ..., a_k) = H(m,x)$. La signature du message est constituée du mot $(a_1, ..., a_k)$ et du nombre y. La vérification de la signature du message consiste, pour le vérificateur, à s'assurer de ce que :

$$H(m, y^2 \cdot \prod_{i=1..k} v_i^{a_i}) = (a_1, \ldots, a_k)$$

Ce procédé de transformation d'un schéma d'identification à trois passes en un schéma de signature est tout à fait général, et s'applique également à la variante du schéma de FIAT et SHAMIR obtenue en réalisant t fois le protocole de base en parallèle.

Dans le schéma de FIAT et SHAMIR, le nombre de multiplications modulaires requises pour le vérifié dans le schéma général à trois passes de paramètres k et t, et pour le schéma de signature associé, est en moyenne de t(1+k/2) (c'est-à-dire une multiplication pour le calcul de chaque témoin et une multiplication pour chaque bit $a_i$ égal à 1). Le nombre de multiplications à effectuer du côté vérificateur est également de t(1+k/2) en moyenne, pour un niveau de sécurité de $2^{-kt}$.

La capacité mémoire requise pour le stockage de la clé secrète est de k mots de même taille que n (au moins 512 bits).

L'intérêt du schéma général (t différent de 1) est de permettre, à niveau de sécurité fixe, une diminution du nombre k de secrets, mais, en contrepartie, le nombre de bits à échanger est multiplié par un facteur de t.

Dans le cas où t=1, on obtient une complexité de 11 multiplications pour une signature sur des questions de 20 bits, et de 33 multiplications pour une authentification sur 64 bits.

Cependant, on peut atteindre le même niveau de sécurité ($2^{-k}$) que précédemment avec des questions de poids plus faible. Pour ce faire, au lieu d'utiliser k secrets et de prendre pour ensemble de questions l'ensemble E des mots de k bits, on utilise un nombre de secrets k' supérieur à k, et on prend pour ensemble F de questions les mots de k' bits de poids égal (ou inférieur ou égal) à un nombre p bien choisi. Le nombre de multiplications passe de k/2 en moyenne à p au plus. La contrepartie de ce gain de temps est l'augmentation du nombre de secrets que doit stocker le vérifié, qui passe de k à k'.

Si l'on reprend l'exemple du schéma de base de FIAT et SHAMIR, une passe avec k=64, la relation $C_{16}^{128} > 2^{64}$ montre que l'ensemble E' des mots de taille k'=128 comprend un sous-ensemble F formé de mots de poids p=16 dont le cardinal est supérieur au cardinal de l'ensemble E des mots de poids 64. Si le vérificateur choisit sa question dans ce sous-ensemble, le niveau de sécurité restera le même, tandis que le temps nécessaire pour calculer la réponse passera de 32 à 16. En revanche, le vérifié devra stocker 128 clés secrètes au lieu de 64.

En ce qui concerne maintenant le schéma de GUILLOU et QUISQUATER, on peut rappeler qu'il est fondé, comme le précédent, sur la difficulté de factoriser un nombre n qui est le produit de deux grands nombres premiers p et q. Au lieu de prouver qu'il détient les racines carrées modulo n de nombres publics, le vérifié montre qu'il détient la racine $e^{ième}$ modulo n de sa clé publique, où e est un nombre dont la taille est typiquement de 16 ou 20 bits dans le cas d'un schéma d'identification et d'au moins 64 bits dans le cas d'un schéma de signature. La clé secrète s du vérifié est liée à sa clé publique v par la relation

$$v = s^{-e} \bmod n.$$

Le protocole d'identification, permettant à un vérifié P de s'identifier auprès d'un vérificateur V est alors le suivant:

(1) P tire au sort un nombre r, compris entre 0 et n-1, et transmet à V le nombre $x=r^e$ mod n, ou une fonction de x, notée h=H(x) ; le nombre x (ou h) est appelé le témoin .

(2) V tire au sort une question notée a, comprise entre 0 et e-1, de taille k bits et transmet à P la question a.

(3) P calcule le produit $y=r.s^a$ et le transmet à V .

(4) V vérifie que $y^e.v^a$ est égal au témoin, ou encore que $H(y^e.v^a)$ est égal à h.

Un schéma de signature peut être dérivé d'un tel schéma d'identification par un procédé similaire à celui qui a été présenté plus haut à propos du schéma de FIAT et SHAMIR : pour signer un message m, P tire au sort un nombre r, en déduit le témoin x, calcule H(m,x) et calcule la réponse y correspondant à la question a=H(m,x). Le couple (a,y) constitue la signature du message.

On peut se placer, à titre d'exemple, dans le cas où e est choisi pour minimiser la complexité des calculs, compte tenu des paramètres de sécurité que sont la taille de n et la longueur k des questions. Le nombre e sera supposé très proche de $2^k$ : on peut par exemple, pour certaines valeurs de k, prendre $e=2^k+1$. Le nombre de multiplications modulaires requises par le calcul du témoin x par P est, pour un tel choix, de k+1 ; par ailleurs, le nombre de multiplications nécessaires au calcul de la réponse y est en moyenne de 3k/2. On aboutit donc à un nombre moyen de multiplications de 1+5k/2 pour P (au lieu de 1+k/2 avec le schéma de base de FIAT et SHAMIR), qu'il s'agisse du schéma d'identification ou de signature. Le nombre moyen de multiplications à effectuer du côté vérifieur est également de 1+5k/2.

La taille de la clé secrète est très courte : un seul mot de même taille que le module n (à comparer avec k secrets de même taille que n dans le schéma de FIAT et SHAMIR).

On obtient donc une complexité de 51 multiplications pour une identification de niveau de sécurité $2^{-20}$, et de 161 multiplications pour une signature de niveau de sécurité $2^{-64}$.

Le calcul d'exponentielles modulaires représente la part prépondérante du temps de calcul dans les schémas décrits précédemment. On utilise généralement l'algorithme BSM ("binary square and multiply algorithm") ou sa version m-adique, qui consiste à calculer, dans un premier temps, les puissances $m^k$-ième pour les multiplier entre elles. Lorsque l'exposant est un nombre binaire de longeur k, le temps de calcul requis est ainsi de 3 k/2.

BRICKELL, GORDON, McCURLEY et WILSON, dans un article intitulé "Fast Exponentiation with Precomputation", publié dans Proceedings EUROCRYPT'92, pp. 200-207, LNCS, vol. 658, Springer Verlag, 1993, d'une part, puis DE ROOIJ, dans un article intitulé "Efficient Exponentiation using Precomputation and Vector Addition Chains", publié dans Proceedings EUROCRYPT'94, pp. 389-399, LNCS 950, Springer Verlag, 1994, d'autre part, ont proposé des méthodes permettant d'accélérer les calculs dans le cas où l'on souhaite calculer, modulo un même nombre n, plusieurs exponentielles d'un même nombre g, pour des exposants u variés. Ces méthodes reposent sur le calcul et le stockage préalables de puissances bien choisies du nombre g.

Pour le schéma de GUILLOU et QUISQUATER, les méthodes de BRICKELL et al., d'une part, et de DE ROOIJ, d'autre part, permettent de diminuer le nombre de multiplications rendues nécessaires par le calcul de la réponse $y=r.s^a$ mod.n, à condition toutefois que l'on ait stocké à l'avance, dans le module de sécurité du vérifié, des puissances bien choisies de sa clé secrète s. L'économie en nombre de multiplications apportée par cette méthode est cependant limitée du fait qu'elle ne s'applique efficacement qu'au calcul de la réponse y, et non au calcul préalable du témoin x.

Bien que les caractéristiques des schémas de FIAT et SHAMIR, d'une part, et de GUILLOU et QUISQUATER, d'autre part, mentionnées précédemment (possibilité d'une gestion des clés publiques basée sur l'identité, complexité des calculs, espace mémoire requis pour le stockage des secrets et le déroulement des calculs, nombre de bits à échanger) mettent ces deux schémas en très bonne place parmi les méthodes d'identification et de signature connues, la complexité des calculs reste très élevée pour une carte à mémoire non dotée d'un coprocesseur cryptographique.

Pour le schéma de GUILLOU et QUISQUATER, le nombre de multiplications requises côté vérifié pour une identification (environ 40 multiplications) est supérieur à ce que peut réaliser en un temps acceptable un microprocesseur banal à 8 bits. Pour le schéma de FIAT et SHAMIR, on peut descendre à un nombre de multiplications acceptable pour un tel processeur (environ 10), mais au prix d'une augmentation de la taille de la clé secrète par un facteur typiquement égal à 16 (ou 8 dans le cas où on accepte que le nombre de bits échangés soit à peu près doublé).

Enfin, aucun des deux schémas ne conduit à une solution satisfaisante pour faire réaliser des calculs de signature sur une carte à mémoire banale ; le nombre de multiplications requises par le schéma de GUILLOU et QUISQUATER reste supérieur à 100, même si l'on précalcule des puissances de la clé secrète dans la carte, et pour une signature de type FIAT et SHAMIR le nombre de secrets de longueur 512 bits ou plus est d'au moins 64 si l'on souhaite limiter le nombre de bits à échanger entre vérifieur et prouveur.

**Exposé de l'invention**

Le but de l'invention est de remédier aux inconvénients des procédés d'identification et de signature précédemment analysés.

A cette fin, la présente invention propose un schéma mixte, c'est-à-dire intermédiaire entre les schémas de FIAT et SHAMIR d'une part, et GUILLOU et QUISQUATER d'autre part. Ce schéma reste fondé comme les précédents, sur la difficulté de factoriser un grand nombre, produit de deux grands nombres premiers p et q. Selon l'invention :

- le vérifié possède une clé secrète constituée par k nombres $s_1, s_2, ..., s_k$ inférieurs à un nombre n, et une clé publique constituée par le nombre n, un nombre e dit exposant public, et k nombres $v_1, v_2, ..., v_k$, définis par $v_i = s_i^{-e}$ mod n, l'indice i prenant toutes les valeurs entières de 1 inclus à n inclus, l'exposant public e étant un petit entier supérieur ou égal à 3,
- le vérificateur connaît le nombre n, le nombre e et les k nombres $v_1, v_2, ..., v_k$, constituant la clé publique du vérifié.

Dans le cas d'un schéma d'identification, le procédé de l'invention est en outre caractérisé par le fait qu'il comprend les opérations successives suivantes :

a) le vérifié P tire au sort un nombre r compris entre 0 et n-1, calcule le nombre $x=r^e$ mod n et transmet au vérificateur V le nombre x (ou une fonction de x notée h=H(x) où H est une fonction à sens unique), le nombre x (ou le nombre h) étant appelé "le témoin",

b) le vérificateur tire au sort k nombres $(a_1, ..., a_l, ..., a_k)$, chaque nombre $a_i$ étant compris entre 1 et e-1, le nombre de $a_i$ non nuls étant au plus égal à un nombre p choisi, et transmet au vérifié l'ensemble des nombres, cet ensemble étant appelé "la question",

c) le vérifié calcule une réponse y, à partir du nombre r tiré au sort, des nombres si constituant la clé secrète, et des nombres $a_i$ formant la question, la réponse y étant définie par le produit :

$$y = r \prod_{i=1 \text{ à } k} s_i^{a_i} \bmod n$$

et le vérifié P transmet au vérificateur V cette réponse y,

d) le vérificateur, à partir de la réponse y qu'il reçoit, du nombre e et des nombres $v_i$ qu'il connaît par la clé publique du vérifié, calcule la quantité :

$$y^e \prod_{i=1 \text{ à } k} v_i^{a_i} \quad \text{ou} \quad H(y^e \cdot \prod_{i=1 \text{ à } k} v_i^{a_i}),$$

et vérifie que le résultat obtenu donne bien le témoin x, (ou h).

Le procédé de l'invention peut rappeler la généralisation présentée dans la norme ISO9798-5. Mais l'invention apporte des éléments originaux dans le choix de l'exposant e et de la question du vérificateur.

Le niveau de sécurité du procédé de l'invention (c'est-à-dire la probabilité de succès d'un tricheur), déterminé par le nombre de question de poids p (respectivement de poids inférieur ou égal à p), vaut :

$$C_k^p \cdot (e-1)^p \quad (resp(\sum_{i=0}^{p} C_k^i)(e-1)^p))$$

Le nombre de termes des produits $\prod_{i=1 \text{ à } k} s_i^{a_i}$ (calculs effectués par le vérifié) et $\prod_{i=1 \text{ à } k} v_i^{a_i}$ (calculs effectués par le vérificateur) qui, si le multiplet $(a_1, ..., a_k)$ était tiré au sort sans aucune condition de poids, serait de k(1-1/e) en moyenne, est ici égal au plus à p, ce qui, à niveau de sécurité constant, peut conduire à un gain de temps appréciable. Ce gain a néanmoins une contrepartie, qui est l'augmentation du nombre k de secrets que doit stocker le vérifié.

Ce procédé de base peut être répété un nombre t de fois, soit séquentiellement (protocole à 3.t passes), soit en parallèle (protocole à 3 passes et quatre opérations) : (1) envoi de t témoins $x_1$ à $x_t$ (ou $h_1$ ou $h_1$),(2) envoi de t questions de k bits, (3) envoi de t réponses $y_1$ à $y_t$, (4) vérification des t équations correspondantes.

Le choix de l'exposant public e, qui, selon l'invention est un petit entier supérieur à 3 apporte des avantages. Il réduit le nombre de secrets (d'un facteur de l'ordre de $\log_2 e$) ou de passes (paramètre t), à niveau de sécurité égal, par rapport à un schéma de type FIAT et SHAMIR (où l'exposant est égal à 2). Mais, comme l'exposant e reste faible (par rapport à des valeurs comme $2^{16}+1$ proposées dans la littérature) le nombre de multiplications reste réduit et assez voisin de celui que nécessiterait la valeur 2. Par "petit" entier, on entend donc un entier qui reste inférieur à environ une centaine. On peut prendre par exemple e=5 ou e=17.

En d'autres termes, la combinaison de la méthode de sélection du multiplet d'ordre k et de l'utilisation de valeurs faibles pour l'exposant public, permet à niveau de sécurité égal et nombre de multiplications approximativement égal, de réduire le nombre k de secrets (donc l'espace mémoire), ou le nombre t de passes (donc la longueur des messages échangés) par rapport à un schéma de FIAT et SHAMIR. Or, les paramètres k et t ont une importance décisive pour les applications de la carte à mémoire.

L'invention porte également sur un procédé de signature de message qui correspond au procédé d'identification qui vient d'être défini. Le vérifié devient alors le signataire S caractérisé par le fait qu'il comprend les opérations successives suivantes :

a) le signataire S tire au sort un nombre r compris entre 0 et n-1 et calcule le nombre $x=r^e$ mod n, le nombre x étant appelé "le témoin",

b) le signataire S calcule, à partir du message m, du témoin x et d'une fonction à sens unique H, une question $(a_1, ..., a_i, ...,a_k)=H(m,x)$ où les $a_i$ sont compris entre 1 et e-1, le nombre de $a_i$ non nuls étant au plus égal à un nombre p choisi,

c) le signataire S calcule la réponse y par le produit

$$y = r \prod_{i=1 \text{ à } k} s_i^{a_i} \bmod n$$

le couple (a,y) constituant la signature du message m,

d) le vérificateur calcule $H(m, y^e \prod_{i=1 \text{ à } k} v_i^{a_i})$ et vérifie que le résultat trouvé est égal à $(a_1, a_2, ..., a_k)$.

Ces procédés ainsi d'ailleurs que le procédé de cryptographie à clé publique pour authentifier une entité et le procédé de cryptographie à clé publique pour signer un message divulgué dans le brevet EP-0 325 238, nécessitent tant chez le vérifié (ou le signataire) que chez le vérificateur le calcul de produits d'exponentielles de la forme :

$$P = \prod_{i=0}^{m-1} v_i^{a_i} \bmod n$$

Où les $v_i$ sont en pratique des entiers modulo n, et les termes $a_i$ des entiers compris entre 0 et e-1. Pour accélérer de tels calculs, l'invention propose un procédé de calcul de tels produits, qui s'applique d'ailleurs aussi bien dans le cas des procédés selon l'invention que dans le cas des procédés généraux d'identification et/ou de signature de message qui font appel à de tels produits. Ce procédé est le suivant:

1. on pose initialement Q=P=1 et d=e-1

2. on calcule ensuite $Q=Q \ast \prod_{0 \leqslant i < m} v_i^{a_i}$ avec $a_i = d$

3. on prend pour nouvelle valeur de P le produit Q*P

4. on pose d=d-1 et on refait les phases 2, 3 et 4 tant que d est positif.

La valeur finale de P est le produit recherché. Le temps de calcul nécessaire est donc majoré par m'+b-3 où m' est le nombre de termes $a_i$ non nuls.

Ce procédé de calcul est bien adapté aux calculs mis en oeuvre dans le procédé d'identification et/ou de signature de l'invention. En effet, dans les expressions des produits d'exponentielles intervenant dans le procédé, le nombre m' de termes est limité, en particulier dans le cas où l'on a recours au procédé de modification de l'ensemble des questions décrit plus haut et, d'autre part, les exposants sont majorés par e-1, qui est un nombre de petite taille.

On peut donner à titre explicatif trois exemples du procédé de l'invention dans le cas d'une signature sur 64 bits.

**Exemple 1**

Dans le premier exemple, on reprend le schéma à trois passes décrit plus haut avec k=35 et e=5. L'algorithme de calcul de produits d'exponentielles présenté précédemment est utilisé lors du calcul de la réponse. La complexité en termes de multiplications modulaires est donc :

- pour la passe 1 (calcul du témoin) : 3 multiplications,
- pour la passe 3 (calcul de la réponse) : p+e-2 multiplications où p est le nombre de $a_i$ non nuls.

Le vérificateur applique le procédé décrit plus haut afin de présenter au vérifié une question qui ne comporte que peu de nombres $a_i$ non nuls. Il choisit pour cela un sous-ensemble E de {1, ..., 35} formé de 16 termes, soit

$$C_{16}^{35} \cong 2^{32}$$ possibilités. Pour tout i n'appartenant pas au sous-ensemble $\Sigma$, il pose alors $a_i=0$ et, pour tout i appartenant à $\Sigma$, il prend pour $a_i$ une valeur aléatoire comprise entre 1 et 4, ce qui correspond à un mot de 2 bits. Le niveau de sécurité est donc bien de $2^{-64}$. Le vérificateur va ainsi soumettre au vérifié une question avec p=16 et le temps de calcul total sera donc 3+16+5-2=22 multiplications.

**Exemple 2 :**

On prend e=5 et k=10, on trouve un temps de calcul de 3+5+5-2=11 multiplications pour un niveau de sécurité donné par le nombre de questions :

$$2^{18} \cong 2^{2 \cdot 5} * C_{10}^{5}$$

**Exemple 3 :**

On prend e=17 et k=22 ; on trouve un temps de calcul de 5+11+17-2=31 multiplications pour un niveau de sécurité donné par le nombre de questions :

$$2^{64} \cong 2^{4 \cdot 11} * C_{22}^{11}$$

Dans le tableau ci-dessous, on peut comparer les procédés entre eux tant pour l'identification que pour la signature. Dans le tableau, FS représente l'algorithme de FIAT et SHAMIR et GQ celui de GUILLOU et QUISQUATER. L'invention est représentée par les trois exemples Ex1, Ex2, Ex3

| Algorithme | Identification | | | Signature | | | |
|---|---|---|---|---|---|---|---|
| | FS | GQ | Ex2 | FS | GQ | Ex3 | Ex1 |
| Clés préstockées | 20 | 1 | 10 | 64 | 1 | 22 | 35 |
| niveau de sécurité | $2^{-20}$ | $2^{-20}$ | $2^{-18}$ | $2^{-64}$ | $2^{-64}$ | $2^{-64}$ | $2^{-64}$ |
| temps de calcul | 11 | 51 | 11 | 33 | 161 | 31 | 22 |

**Revendications**

**1.** Procédé de calcul de produits de la forme :

$$P = \prod_{i=0}^{m-1} v_i^{a_i}$$

où les termes $v_i$ sont des entiers modulo n,
où les termes $a_i$ sont des entiers compris entre 0 et(e-1), et e est un entier supérieur ou égal à 3, dans un procédé d'identification ou de signature de message, **caractérisé par le fait qu'**on s'y prend comme suit:

    a') on pose initialement Q=P=1 et d=e-1,
    b') on prend pour nouvelle valeur de Q le produit

$$Q * \prod v_i^{a_i} \quad avec\, 0 \le i < m \; et \; a_i = d,$$

    c') on prend pour nouvelle valeur de P le produit Q*P,
    d') on réduit d d'une unité, et l'on réitère les opérations b'), c') et d') tant que d est positif.

**2.** Procédé d'identification entre une première entité P appelé le vérifié et une seconde entité V appelée le vérificateur, ces entités étant constituées par un module de sécurité comprenant une carte à mémoire, dans lequel :

    - le vérifié possède une clé secrète constituée par k nombres $s_1$, $s_2$, ..., $s_k$ inférieurs à un nombre n, et une clé publique constituée par le nombre n, un nombre e dit exposant public et k nombres $v_1$, $v_2$ ..., $v_k$, définis par

$$vi = s_i^{-e} \text{ mod n},$$ l'indice i prenant toutes les valeurs entières de 1 à n inclus, l'exposant public e étant un petit entier supérieur ou égal à 3,
    - le vérificateur connaît le nombre n, le nombre e et les k nombres $v_1$, $v_2$, ..., $v_k$, constituant la clé publique du vérifié,

ce procédé comprenant en outre les opérations successives suivantes :

    a) le vérifié P tire au sort un nombre r compris entre 0 et n-1, calcule le nombre $x=r^e$ mod n et transmet au vérificateur V le nombre x ou une fonction de x notée h=H(x) où H est une fonction déterminée, le nombre x ou le nombre h étant appelé "le témoin",
    b) le vérificateur tire au sort k nombres $a_1$, ..., $a_i$, ..., $a_k$, chaque nombre $a_i$ étant compris entre 0 et (e-1), et il transmet au vérifié l'ensemble des nombres, cet ensemble étant appelé "la question",
    c) le vérifié calcule la réponse y, à partir du nombre r tiré au sort, des nombres si constituant la clé secrète, et des nombres $a_i$ de la question, la réponse y étant définie par le produit :

$$y = r \prod_{i=1 \, à \, k} s_i^{a_i} \text{ mod n}$$

et le vérifié P transmet au vérificateur V cette réponse y,
    d) le vérificateur, à partir de la réponse y qu'il reçoit, du nombre e et des nombres $v_i$ qu'il connaît par la clé publique du vérifié, calcule :

$$y^e \cdot \prod_{i=1 \, à \, k} v_i^{a_i} \quad \text{ou} \quad H\left( y^e \cdot \prod_{i=1 \, à \, k} v_i^{a_i} \right)$$

et vérifie que le résultat trouvé donne bien le témoin x ou h,

ce procédé étant **caractérisé en ce qu'**au moins l'un des produits d'exponentielles ci-dessus est calculé au moyen du procédé de calcul selon la revendication 1.

3. Procédé d'identification selon la revendication 2, **caractérisé en ce que**, préalablement à l'étape b), on choisit un nombre p inférieur à k, et **en ce que** ledit tirage au sort des k nombres $a_1, ... a_i, ... a_k$ est tel que le nombre de $a_i$ non nuls est au plus égal audit nombre p.

4. Procédé d'identification **caractérisé en ce qu'**il résulte de la répétition un nombre t de fois en parallèle du procédé d'identification selon la revendication 2 ou la revendication 3 :

   - dans l'opération a) le vérifié respectivement le signataire calcule un nombre t de témoins $x_1, x_2, ..., x_t$ ou $h_1, h_2, ... , h_t$,
   - dans l'opération b) le vérificateur pose t questions de k bits,
   - dans l'opération c) le vérifié respectivement le signataire calcule t réponses $y_1, y_2, ..., y_t$,
   - dans l'opération d) le vérificateur effectue t vérifications avec les t témoins.

5. Procédé d'identification, **caractérisé en ce que** l'on répète le procédé d'identification selon l'une des revendications 2 à 4 séquentiellement un nombre t de fois.

6. Procédé de signature de message entre une première entité appelée le signataire S et une seconde entité V appelée le vérificateur, dans lequel :

   - le signataire S possède une clé secrète constituée par k nombres $s_1, s_2, ..., s_k$ inférieurs à un nombre n, et une clé publique constituée par le nombre n, un nombre e et k nombres $v_1, v_2, ...,v_k$, définis par $v_i = s_i^{-e}$

   mod n, ce signataire ayant un message m à signer et à transmettre,
   - le vérificateur connaît le nombre n, le nombre e et les k nombres $v_1, v_2, ... v_k$, constituant la clé publique du signataire,

   ce procédé comprenant en outre les opérations successives suivantes :

   a) le signataire S tire au sort un nombre r compris entre 0 et n-1 et calcule le nombre $x=r^e$ mod n, le nombre x est appelé "le témoin",
   b) le signataire S, calcule à partir du message m, du témoin x, et d'une fonction à sens unique H, question a $(a_1, ...., a_i, ..., a_k)=H(m,x)$ où nombres $a_i$ sont compris entre 0 et (e-1),

   c) le signataire calcule une réponse y par le produit $y = r \prod_{i=1 \text{ à } k} S_i^{a_i} \bmod n$, le couple (a, y) constituant la signature du message m,

   d) le vérificateur calcule $H\left(m, y^e \prod_{i=1 \text{ à } k} v_i^{a_i}\right)$ et vérifie que le résultat trouvé est égal à $a_1, a_i, ..., a_k$),

   ce procédé étant **caractérisé en ce qu'**au moins l'un des produits d'exponentielles ci-dessus est calculé au moyen du procédé de calcul selon la revendication 1.

7. Procédé de signature de message selon la revendication 6, **caractérisé en ce que**, préalablement à l'étape b), on choisit un nombre p inférieur à k, et **en ce que** ledit tirage au sort des k nombres $a_1, ... a_i, ... a_k$ est tel que le nombre de $a_i$ non nuls est au plus égal audit nombre p.

8. Procédé de signature de message, **caractérisé en ce qu'**il résulte de la répétition un nombre t de fois en parallèle du procédé de signature de message selon la revendication 6 ou la revendication 7 :

   - dans l'opération a) le vérifié respectivement le signataire calcule un nombre t de témoins $x_1, x_2, ..., x_t$ ou $h_1, h_2, ..., h,$

- dans l'opération b) le vérificateur pose t questions de k bits,
- dans l'opération c) le vérifié respectivement le signataire calcule t réponses $y_1$, $y_2$, ..., $y_t$,
- dans l'opération d) le vérificateur effectue t vérifications avec les t témoins.

**9.** Procédé de signature de message, **caractérisé en ce que** l'on répète le procédé de signature de message selon l'une des revendications 6 à 8 séquentiellement un nombre t de fois.

**Claims**

**1.** Method of calculating products of the form:

$$P = \prod_{i=0}^{m-1} v_i^{a_i}$$

where the terms $v_i$ are integers modulo n,
where the terms $a_i$ are integers lying between 0 and (e-1), and e is an integer greater than or equal to 3,
in a message identification or signature method, **characterized in that** the following is undertaken:

a') initially we put Q=P=1 and d=e-1,
b') the product

$$Q * \prod v_i^{a_i} \text{ with } 0 \le i < m \text{ and } a_i = d$$

is taken as new value of Q,
c') the product Q*P is taken as new value of P,
d') d is reduced by one unit, and operations b'), c') and d') are repeated so long as d is positive.

**2.** Method of identification between a first entity P called the claimant and a second entity V called the verifier, these entities consisting of a security module comprising a memory card, in which method:

- the claimant possesses a secret key consisting of k numbers $s_1$, $s_2$, ..., $s_k$ that are less than a number n, and a public key consisting of the number n, a number e termed the public exponent and k numbers $v_1$, $V_2$, ... , $v_k$, defined by $v_i = s_i^{-e}$ mod n, the index i taking all the integer values from 1 to n inclusive, the public exponent e being a small integer greater than or equal to 3,
- the verifier knows the number n, the number e and the k numbers $v_1$, $v_2$, ..., $v_k$, constituting the public key of the claimant,

this method furthermore comprising the following successive operations:

a) the claimant P randomly draws a number r lying between 0 and n-1, calculates the number $x = r^e$ mod n and transmits to the verifier V the number x or a function of x denoted h=H(x) where H is a determined function, the number x or the number h being called "the witness",
b) the verifier randomly draws k numbers $a_1$, ..., $a_i$, ..., $a_k$, each number $a_i$ lying between 0 and (e-1), and it transmits the set of numbers to the claimant, this set being called "the question",
c) the claimant calculates the answer y, on the basis of the randomly drawn number r, the numbers $s_i$ constituting the secret key, and the numbers $a_i$ of the question, the answer y being defined by the product:

$$y = r \prod_{i=1 \text{ to } k} s_i^{a_i} \mod n$$

and the claimant P transmits this answer y to the verifier V,

d) the verifier, on the basis of the answer y that it receives, of the number e and the numbers $v_i$ that it knows through the public key of the claimant, calculates:

$$y^e \cdot \prod_{i=1\,to\,k} v_i^{a_i} \quad or \quad H\left(y^e \cdot \prod_{i=1\,to\,k} v_i^{a_i}\right)$$

and verifies that the result found does indeed give the witness x or h,

this method being **characterized in that** at least one of the above exponential products is calculated by means of the calculation method according to Claim 1.

3. Method of identification according to Claim 2, **characterized in that**, prior to step b), a number p that is less than k is chosen, and **in that** said random drawing of the k numbers $a_1$, ..., $a_i$, ..., $a_k$ is such that the number of nonzero $a_i$ is at most equal to said number p.

4. Method of identification, **characterized in that** it results from the repeating of the method of identification according to Claim 2 or Claim 3 a number t of times in parallel:

- in operation a) the claimant respectively the signatory calculates a number t of witnesses $x_1$, $x_2$, ..., $x_t$ or $h_1$, $h_2$, ..., $h_t$,
- in operation b) the verifier poses t questions of k bits,
- in operation c) the claimant respectively the signatory calculates t answers $y_1$, $y_2$, ..., $y_t$,
- in operation d) the verifier performs t verifications with the t witnesses.

5. Method of identification, **characterized in that** the method of identification according to one of Claims 2 to 4 is repeated sequentially a number t of times.

6. Method of message signature between a first entity called the signatory S and a second entity V called the verifier, in which:

- the signatory S possesses a secret key consisting of k numbers $s_1$, $s_2$, ... , $s_k$ that are less than a number n, and a public key consisting of the number n, a number e and k numbers $v_1$, $v_2$, ..., $v_k$, defined by $v_i = S_i^{-e}$ mod n, this signatory having a message m to be signed and to be transmitted,

- the verifier knows the number n, the number e and the k numbers $v_1$, $v_2$, ..., $v_k$, constituting the public key of the signatory,

this method furthermore comprising the following successive operations:

a) the signatory S randomly draws a number r lying between 0 and n-1 and calculates the number $x = r^e$ mod n, the number x is called "the witness",

b) the signatory S calculates, on the basis of the message m, the witness x, and a one-way function H, a question $a = (a_1, ..., a_i, ..., a_k) = H(m,x)$, where the numbers $a_i$ lie between 0 and (e-1),

c) the signatory calculates an answer y through the product $y = r \prod_{i=1\,to\,k} S_i^{a_i}$ mod n, the pair (a,y) constituting the signature of the message m,

d) the verifier calculates $H\left(m, y^e \prod_{i=1\,to\,k} v_i^{a_i}\right)$ and verifies that the result found is equal to $(a_1, a_i, ... , a_k)$,

this method being **characterized in that** at least one of the above exponential products is calculated by means of the calculation method according to Claim 1.

**7.** Method of message signature according to Claim 6, **characterized in that**, prior to step b), a number p that is less than k is chosen, and **in that** said random drawing of the k numbers $a_1$, ..., $a_i$, ..., $a_k$ is such that the number of nonzero $a_i$ is at most equal to said number p.

**8.** Method of message signature, **characterized in that** it results from the repeating of the method of message signature according to Claim 6 or Claim 7 a number t of times in parallel:

- in operation a) the claimant respectively the signatory calculates a number t of witnesses $x_1$, $X_2$, ..., $x_t$ or $h_1$, $h_2$, ... , $h_t$,
- in operation b) the verifier poses t questions of k bits,
- in operation c) the claimant respectively the signatory calculates t answers $y_1$, $y_2$, ..., $y_t$,
- in operation d) the verifier performs t verifications with the t witnesses.

**9.** Method of message signature, **characterized in that** the method of message signature according to one of Claims 6 to 8 is repeated sequentially a number t of times.

**Patentansprüche**

**1.** Verfahren zur Berechnung von Produkten der Form

$$P = \prod_{i=0}^{m-1} v_i^{a_i}$$

wobei die Ausdrücke $v_i$ ganze Zahlen Modulo n sind,
wobei die Ausdrücke $a_i$ ganze Zahlen zwischen 0 und (e-1) sind, und e eine ganze Zahl größer als oder gleich 3 ist, in einem Verfahren der Identifikation oder der Signatur einer Mitteilung, **dadurch gekennzeichnet, dass** folgendermaßen vorgegangen wird:

a') ursprünglich wird Q=P=1 und d=e-1 gesetzt,
b') als neuer Wert von Q wird das Produkt

$$Q * \prod v_i^{a_i} \quad \text{mit } 0 \leq i < m \text{ und } a_i = d,$$

genommen,
c') als neuer Wert von P wird das Produkt Q*P genommen,
d') d wird um eine Einheit verringert, und die Vorgänge b'), c') und d') werden wiederholt, solange d positiv ist.

**2.** Identifikationsverfahren zwischen einer ersten Einheit P, der Überprüfte genannt, und einer zweiten Einheit V, der Prüfer genannt, wobei diese Einheiten aus einem Sicherheitsmodul bestehen, der eine Speicherkarte aufweist, wobei:

- der Überprüfte einen geheimen Schlüssel, der aus k Zahlen $s_1$, $s_2$, ..., $s_k$ kleiner als eine Zahl n besteht, und einen öffentlichen Schlüssel besitzt, der aus der Zahl n, einer Zahl e, öffentlicher Exponent genannt, und k Zahlen $v_1$, $v_2$, ..., $v_k$ besteht, die durch $v_i = s_i^{-e} \bmod n$ definiert werden, wobei der Index i alle ganzen Werte von 1 bis einschließlich n annimmt, wobei der öffentliche Exponent e eine kleine ganze Zahl größer als oder gleich 3 ist,
- der Prüfer die Zahl n, die Zahl e und die k Zahlen $v_1$, $v_2$, ..., $v_k$ kennt, die den öffentlichen Schlüssel des Überprüften bilden,

wobei dieses Verfahren außerdem die folgenden aufeinanderfolgenden Vorgänge aufweist:

a) der Überprüfte P wählt eine Zahl r zufällig aus, die zwischen 0 und n-1 liegt, berechnet die Zahl $x=r^e$ mod n und überträgt an den Prüfer V die Zahl x oder eine Funktion von x mit der Bezeichnung h=H(x), wobei H eine bestimmte Funktion ist, wobei die Zahl x oder die Zahl h "der Zeuge" genannt wird,
b) der Prüfer wählt zufällig k Zahlen $a_1$, ..., $a_i$, ..., $a_k$ aus, wobei jede Zahl $a_i$ zwischen 0 und (e-1) liegt, und überträgt an den Überprüften die Gesamtheit der Zahlen, wobei diese Gesamtheit "die Frage" genannt wird,
c) der Überprüfte berechnet die Antwort y ausgehend von der zufällig ausgewählten Zahl r, den den geheimen Schlüssel bildenden Zahlen $s_i$, und den Zahlen $a_i$ der Frage, wobei die Antwort y durch das Produkt:

$$y = r \prod_{i=1\,\mathrm{zu}\,k} s_i^{a_i} \bmod n$$

definiert wird, und der Überprüfte P überträgt diese Antwort y an den Prüfer V,
d) der Prüfer berechnet ausgehend von der Antwort y, die er empfängt, der Zahl e und den Zahlen $v_i$, die er durch den öffentlichen Schlüssel des Überprüften kennt:

$$y^e \cdot \prod_{i=1\,\mathrm{zu}\,k} v_i^{a_i} \quad \text{oder} \quad H\left(y^e \cdot \prod_{i=1\,\mathrm{zu}\,k} v_i^{a_i}\right)$$

und überprüft, ob das gefundene Ergebnis wirklich den Zeugen x oder h ergibt,

wobei dieses Verfahren **dadurch gekennzeichnet ist, dass** mindestens eines der obigen Produkte von exponentiellen Funktionen mittels des Rechenverfahrens nach Anspruch 1 berechnet wird.

3. Identifikationsverfahren nach Anspruch 2, **dadurch gekennzeichnet, dass** vor dem Schritt b) eine Zahl p kleiner als k gewählt wird, und dass die zufällige Auswahl der k Zahlen $a_1$, $a_i$, ..., $a_k$ so ist, dass die Zahl von $a_i$ ungleich null höchstens gleich der Zahl p ist.

4. Identifikationsverfahren, **dadurch gekennzeichnet, dass** aus der t-maligen parallelen Wiederholung des Identifikationsverfahrens nach Anspruch 2 oder Anspruch 3 resultiert:

- in der Operation a) berechnet der Überprüfte bzw. der Signatar eine Zahl t von Zeugen $x_1$, $x_2$, ..., $x_t$ oder $h_1$, $h_2$, ..., $h_t$,
- in der Operation b) stellt der Prüfer t Fragen von k Bits,
- in der Operation c) berechnet der Überprüfte bzw. der Signatar t Antworten $y_1$, $y_2$, ..., $y_t$,
- in der Operation d) führt der Prüfer t Überprüfungen mit den t Zeugen durch.

5. Identifikationsverfahren, **dadurch gekennzeichnet, dass** das Identifikationsverfahren nach einem der Ansprüche 2 bis 4 sequentiell t Mal wiederholt wird.

6. Verfahren der Mitteilungssignatur zwischen einer ersten Einheit, Signatar S genannt, und einer zweiten Einheit V, Prüfer genannt, bei dem:

- der Signatar S einen geheimen Schlüssel, der aus k Zahlen $s_1$, $s_2$, ..., $s_k$ kleiner als eine Zahl n besteht, und einen öffentlichen Schlüssel besitzt, der aus der Zahl n, einer Zahl e und k Zahlen $v_1$, $v_2$, ..., $v_k$ besteht, die von $v_i = S_i^{-e}$ mod n definiert werden, wobei dieser Signatar eine Mitteilung m zu unterzeichnen und zu übertragen hat,
- der Prüfer die Zahl n, die Zahl e und die k Zahlen $v_1$, $v_2$, ..., $v_k$ kennt, die den öffentlichen Schlüssel des Signatars bilden,

wobei dieses Verfahren außerdem die folgenden aufeinander folgenden Vorgänge aufweist:

a) der Signatar S wählt eine Zahl r zufällig aus, die zwischen 0 und n-1 liegt, und berechnet die Zahl $x=r^e$ mod n, die Zahl x wird "der Zeuge" genannt,
b) der Signatar S berechnet ausgehend von der Mitteilung m, dem Zeugen x und einer Einwegfunktion H eine Frage a= $(a_1, ..., a_i, ..., a_k)$ =H(m, x), in der die Zahlen $a_i$ zwischen 0 und (e-1) liegen,
c) der Signatar berechnet eine Antwort y durch das Produkt

$$y=r \prod_{i=1 \text{ zu } k} S_i^{a_i} \bmod n$$

wobei das Paar (a,y) die Signatur der Mitteilung m bildet,
d) der Prüfer berechnet

$$H\left( m, y^e \prod_{i=1 \text{ zu } k} v_i^{a_i} \right)$$

und überprüft, ob das gefundene Ergebnis gleich $(a_1, a_i, ..., a_k)$ ist,

wobei dieses Verfahren **dadurch gekennzeichnet ist, dass** mindestens eines der obigen Produkte von exponentiellen Funktionen mittels des Rechenverfahrens nach Anspruch 1 berechnet wird.

7. Verfahren der Mitteilungssignatur nach Anspruch 6, **dadurch gekennzeichnet, dass** vor dem Schritt b) eine Zahl p kleiner als k gewählt wird, und dass die zufällige Auswahl der k Zahlen $a_1, ..., a_i, ..., a_k$ so ist, dass die Zahl von $a_i$ ungleich null höchstens gleich der Zahl p ist.

8. Verfahren der Mitteilungssignatur, **dadurch gekennzeichnet, dass** es aus der t-maligen parallelen Wiederholung des Verfahrens der Mitteilungssignatur nach Anspruch 6 oder nach Anspruch 7 resultiert:

   - in der Operation a) berechnet der Überprüfte bzw. der Signatar eine Zahl t von Zeugen $x_1, x_2, ..., x_t$ oder $h_1, h_2, ..., h_t$,
   - in der Operation b) stellt der Prüfer t Fragen von k Bit,
   - in der Operation c) berechnet der Überprüfte bzw. der Signatar t Antworten $y_1, y_2, ..., y_t$,
   - in der Operation d) führt der Prüfer t Überprüfungen mit den t Zeugen durch.

9. Verfahren der Mitteilungssignatur, **dadurch gekennzeichnet, dass** das Verfahren der Mitteilungssignatur nach einem der Ansprüche 6 bis 8 sequentiell t Mal wiederholt wird.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4405829 A
- US 4748668 A
- FR 2620248 A
- EP 0311470 A
- US 5218637 A
- EP 0384475 A
- US 4995082 A
- US 5231668 A
- EP 0325238 A

**Littérature non-brevet citée dans la description**

- **T. EL GAMAL.** A public key cryptosystem and a signature scheme based on discrete logarithms. *IEEE Transaction on Information Theory,* 1985, vol. IT-31, 469-472
- An Efficient Identification Scheme Based on Permuted Kernels. **A. SHAMIR.** Comptes-Rendus de la conférence CRYPTO'89. Springer Verlag, 1989, vol. 435, 235-251
- A New Identification Scheme Based On Syndrome Decoding. **J. STERN.** Comptes-Rendus de CRYPTO'93. Springer Verlag, 1994, vol. 773, 13-21
- Fast Exponentiation with Precomputation. **BRICKELL ; GORDON ; MCCURLEY ; WILSON.** Proceedings EUROCRYPT'92. Springer Verlag, 1993, vol. 658, 200-207
- Efficient Exponentiation using Precomputation and Vector Addition Chains. **DE ROOIJ.** Proceedings EUROCRYPT'94. Springer Verlag, 1994, 389-399